(19) **Europäisches Patentamt European Patent Office Office européen des brevets**

(11) **EP 3 661 034 B1**

(12) **EUROPEAN PATENT SPECIFICATION**

(45) Date of publication and mention of the grant of the patent:
**01.05.2024 Bulletin 2024/18**

(21) Application number: **18837348.4**

(22) Date of filing: **25.07.2018**

(51) International Patent Classification (IPC):
*H02K 51/00* (2006.01)   *H02K 16/02* (2006.01)
*H02K 49/10* (2006.01)

(52) Cooperative Patent Classification (CPC):
**H02K 49/102; H02K 16/02; H02K 51/00**

(86) International application number:
**PCT/JP2018/027788**

(87) International publication number:
**WO 2019/022100 (31.01.2019 Gazette 2019/05)**

(54) **ROTARY ELECTRIC MACHINE**

ELEKTRISCHE DREHMASCHINE

MACHINE ÉLECTRIQUE TOURNANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2017 JP 2017144862**

(43) Date of publication of application:
**03.06.2020 Bulletin 2020/23**

(73) Proprietor: **Panasonic Holdings Corporation Osaka 571-8501 (JP)**

(72) Inventors:
• **UKAJI, Hajime**
  **Osaka 540-6207 (JP)**
• **YOSHIKAWA, Yuichi**
  **Osaka 540-6207 (JP)**
• **HIRATA, Katsuhiro**
  **Osaka 565-0871 (JP)**
• **NIGUCHI, Noboru**
  **Osaka 565-0871 (JP)**

(74) Representative: **SSM Sandmair Patentanwälte Rechtsanwalt Partnerschaft mbB Joseph-Wild-Straße 20 81829 München (DE)**

(56) References cited:
**EP-A1- 3 007 336      EP-A2- 2 133 981
EP-B1- 1 481 463      JP-A- 2001 275 396
JP-A- 2016 168 108    JP-A- 2017 123 767**

**Description**

TECHNICAL FIELD

The present invention relates to a rotary electric machine having a magnetic deceleration mechanism.

BACKGROUND ART

Patent Literature (PTL) 1 and Non-patent Literature (NPL) 1 each disclose a mechanism of a rotary electric machine including a magnetic transmission mechanism. Each of the mechanism of the rotary electric machine includes, in stated order from radially centermost to radially outermost, a first rotor including permanent magnets, a second rotor including pole pieces, and a stator including a winding, and the first rotor, the second rotor, and the stator are disposed coaxially and spaced apart from one another. The first rotor is driven by applying three-phase current to the winding of the stator, and reaction torque of a magnetic reduction gear is generated in the second rotor by rotation of the first rotor. With this, a system that does not have mechanical contact and achieves low vibration, low noise, and high transmission efficiency can be obtained. In addition, the system achieves a small size or high power by combining the magnetic reduction gear and the rotary electric machine together. Moreover, the system also serves as a torque limiter by magnetically slipping when the torque exceeds allowable torque.

Citation List

Patent Literature

PTL 1: Japanese Patent No. 5204094

Non-Patent Literature

NPL 1: Noboru NIGUCHI, Katsuhiro HIRATA, "A Novel Magnetic-Geared Motor", Journal of the Japan Society of Applied Electromagnetics and Mechanics, Vol. 21, No. 2 (2013), pp. 110 to 115
Further relevant prior art is EP 3 007 336 A1.

SUMMARY OF THE INVENTION

TECHNICAL PROBLEM

In PTL 1 and NPL 1, torque can be generated in only one of the rotors by rotating magnetic field of the winding of the stator, and the generated torque is reduced and transmitted to the other rotor.
The present invention aims to achieve a small-sized rotary electric machine to save resources and reduce costs, and also achieve high power to increase the output of such a rotary electric machine in a limited space.

SOLUTION TO PROBLEM

The invention is set out in appended claim 1. Dependent claim 2 describes an advantageous embodiment.

ADVANTAGEOUS EFFECT OF INVENTION

The present invention makes it possible to achieve a rotary electric machine having a higher power density.
The effects can be obtained that two rotors generate torque by rotary magnetic field of the windings of the stator, and the torque generated in one of the rotors can be reduced and transmitted to the other rotor. These effects are advantageous in, for example, achieving a small-sized rotary electric machine to save resources and reduce costs, and also achieving high power to increase the output of such a rotary electric machine in a limited space. Thus, the rotary electric machine according to the present invention is useful.

BRIEF DESCRIPTION OF DRAWINGS

    FIG. 1 illustrates a conventional magnetic deceleration mechanism, (A) is a plan view and (B) is a perspective view.

FIG. 2 illustrates a magnetic action on a conventional high-speed rotor and stator, and (A) is a plan view of pole pairs of a high-speed rotor, the pole pairs made up of permanent magnets, (B) is a graph showing magnetomotive force distribution of the permanent magnets of the high-speed rotor, (C) is a plan view of the stator, and (D) is a graph showing permeance distribution of pole pieces.

FIG. 3 is a configuration diagram of the rotary electric machine according to an example useful for understanding the invention, (A) is a perspective view, and (B) is a cross-sectional view illustrating a plane of a magnetic circuit.

FIG. 4 shows analysis results of the induced voltage that is generated in windings of the stator when each rotor according to the present invention is rotated.

FIG. 5 shows an analysis result of a transmission torque that is generated due to a difference between two rotor angles (phases) according to the present invention.

FIG. 6 shows an analysis result of torque when three-phase sine-wave current is applied to the coils according to the present invention.

FIG. 7 shows torque generated in two rotors when operation verification is performed in one embodiment of the present invention.

FIG. 8 shows rotation angles of two rotors when operation verification is performed in one embodiment of the present invention.

DESCRIPTION OF EXEMPLARY EMBODIMENT

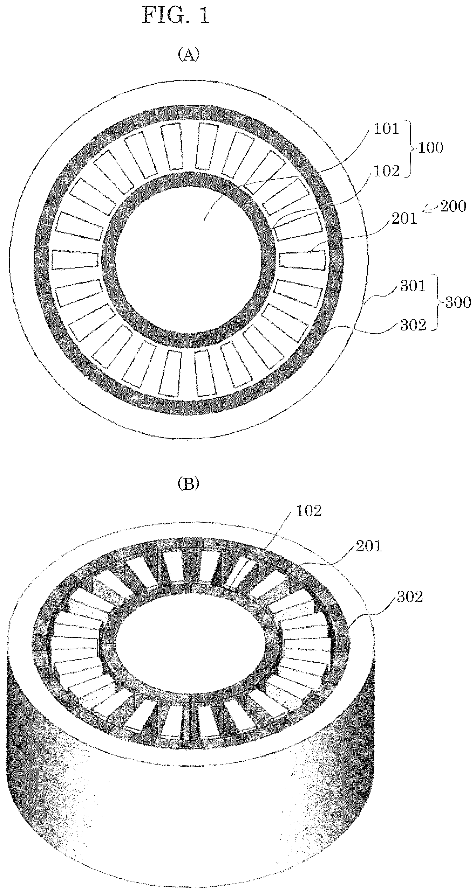

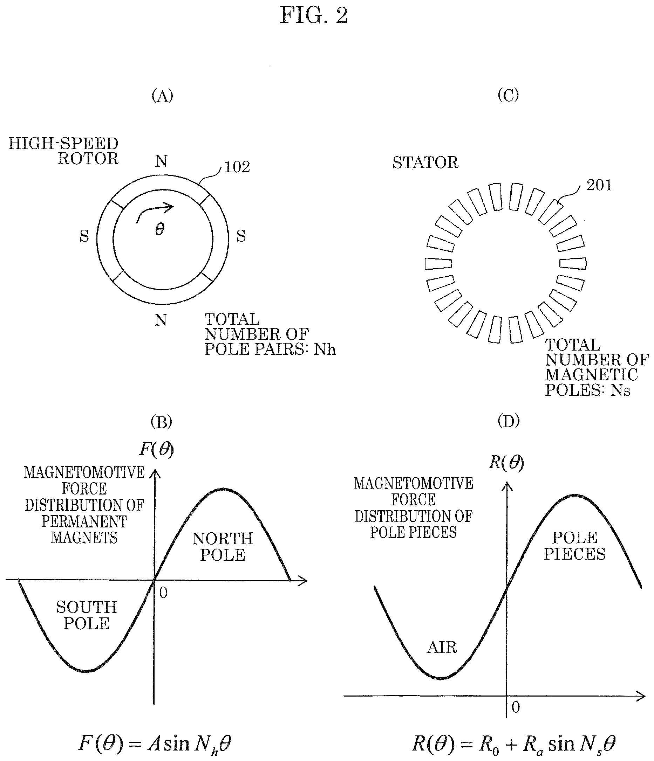

FIG. 1 and FIG. 2 are diagrams for describing a structure and the deceleration principle of a conventional magnetic deceleration mechanism. First, the deceleration principle is described with reference to these diagrams.

In FIG. 1, the conventional magnetic deceleration mechanism includes: high-speed rotor 100 that is disposed in a center portion; stator 200 that is disposed between high-speed rotor 100 and low-speed rotor 300; and low-speed rotor 300 that is disposed on the outermost circumference, all of which are disposed coaxially and spaced apart from one another. Each of the components has a predetermined length in an axis direction. High-speed rotor 100 is connected to, for example, an output axis of a motor etc. to receive torque which is not illustrated. High-speed rotor 100 includes: an iron core made of a magnetic material and having a shape of, for example, a shaft (or may be cylindrical); and pole pairs 102 made up of permanent magnets such that north poles and south poles are disposed alternately and evenly on the outer circumference of the iron core in a circumferential direction. In the example of FIG. 1, the total number of pole pairs is two. Stator 200 includes a plurality of pole pieces 201 that are bar shaped, made of a magnetic material and, extended in the axis direction, and disposed on a circumference at a predetermined pitch to face the outer circumference of pole pairs 102. Each of pole pieces 201 has a vertical cross-section that is substantially rectangle, and its planar section faces in a radial direction. Low-speed rotor 300 includes: annular body 301 made of a magnetic material and a plurality of magnetic poles 302 composed of permanent magnets disposed such that the north poles and the south poles are disposed alternately on the inner circumference of annular body 301 in the circumferential direction.

Next, in FIG. 2, now, when magnetomotive force distribution $F(\theta)$ of the permanent magnets (see (A) in FIG. 2) with respect to rotation direction $\theta$ of high-speed rotor 100 is assumed to be a sine wave as shown in (B) in FIG. 2, $F(\theta) = A\sin N_h\theta$ can be assumed (where $N_h$ denotes the total number of pole pairs of high-speed rotor 100, and A denotes a coefficient). Moreover, when permeance distribution $R(\theta)$ (that shows a degree to which a material admits a flow of magnetic flux) on the outer circumference of pole piece 201 of stator 200 illustrated in (C) in FIG. 2 is also assumed to be a sine wave as shown in (D) in FIG. 2, $R(\theta) = Ro + R_a\sin N_S\theta$ can be assumed (where Ns denotes the total number of the pole pieces of the stator, and each of Ro and $R_a$ denotes a coefficient).

Therefore, magnetic flux $\varphi(\theta)$ that is generated around the outer circumference of the pole piece of the stator is expressed as the following Expression (1).

[MATH 1]

$$\emptyset(\theta) = F(\theta) \times R(\theta) = AR_0\sin N_h\theta + \frac{1}{2}AR_a\{\cos(N_s - N_h)\theta - \cos(N_s + N_h)\theta\} \quad \cdot\cdot\cdot\ (1)$$

In Expression (1), $N_h$ in the first term is the same component as the total number of pole pairs $N_h$ of high-speed rotor 100. $N_S - N_h$ and Ns + $N_h$ in the second term are harmonic components. In other words, magnetic flux $\varphi(\theta)$ generated around the outer circumference of the pole pieces of the stator includes two types of harmonic components Ns - $N_h$ and Ns + $N_h$, other than basic component (main component) $N_h$.

Next, when the case where high-speed rotor 100 is rotated by $\Delta\theta$ while the stator is fixed is considered, the magnetomotive force distribution at this time is $F(\theta + \Delta\theta)$. On the other hand, the permeance distribution is $R(\theta)$, because the stator does not rotate. Magnetic flux $\varphi(\theta + \Delta\theta)$ around the outer circumference of the pole pieces of the stator when the high-speed rotor is rotated by $\Delta\theta$ is expressed as the following Expression (2).

[MATH 2]

$$\emptyset(\theta + \Delta\theta) = F(\theta + \Delta\theta) \times R(\theta)$$

$$= AR_0 \sin N_h(\theta + \Delta\theta)$$

$$+ \frac{1}{2} AR_a \left\{ \cos(N_s - N_h)(\theta - \frac{N_h}{N_s - N_h}\Delta\theta) - \cos(N_s + N_h)\theta + \frac{N_h}{N_s + N_h}\Delta\theta \right\} \cdots (2)$$

In Expression (2), since $N_h$ in the first term of magnetic flux $\varphi(\theta + \Delta\theta)$ is $(\theta + \Delta\theta)$, i.e., $+\Delta\theta$ component is present, $N_h$ is a component rotating at the same speed as high-speed rotor 100. On the other hand, Ns - $N_h$ and Ns + $N_h$ in the second term are both harmonics having different speeds from the speed of high-speed rotor 100. In other words, Ns - $N_h$ rotates by $-N_h\Delta\theta/(N_S-N_h)$ with respect to the rotation by $\Delta\theta$ of high-speed rotor 100. Moreover, regarding $N_s + N_h$, since the rotation is performed by $N_h\Delta\theta / (Ns + N_h)$ with respect to the rotation by $\Delta\theta$ of the high-speed rotor, both of the rotation speeds differ from the basic component. When the total number of magnetic poles of low-speed rotors 300 is set to either Ns - $N_h$ or Ns + $N_h$, low-speed rotor 300 will rotate at a different rotation speed with respect to the total number of magnetic poles that is set.

In order to achieve that, when Ni denotes the total number of magnetic poles of low-speed rotor 300, $N_l$ is set to satisfy $N_l$ = Ns -$N_h$, or $N_l$ = Ns + $N_h$. In other words, when these expressions are rewritten, Ns = $N_l + N_h$, or Ns = $N_l$-$N_h$ (i.e., Ns = $N_l \pm N_h$). These will be conditions for establishing a magnetic deceleration mechanism.

Moreover, reduction ratio $G_r$ is $G_r = \pm N_l/N_h$. Note that when reduction ratio $G_r$ is positive, it indicates that high-speed rotor 100 and low-speed rotor 300 rotate in the same direction. When reduction ratio $G_r$ is negative, it indicates that high-speed rotor 100 and low-speed rotor 300 rotate in opposite directions. However, a driving source that mechanically rotates the stator is necessary, i.e, typically, adding a motor is necessary, for example. Thus, new problems will arise, for example, the mechanism will be complicated, increase in size, and expensive.

EMBODIMENT

In view of the above, in the present invention, windings are provided to the pole pieces of the stator of the conventional magnetic deceleration mechanism illustrated in FIG. 1. The present invention provides a rotary electric machine that is capable of generating torque in two rotors.

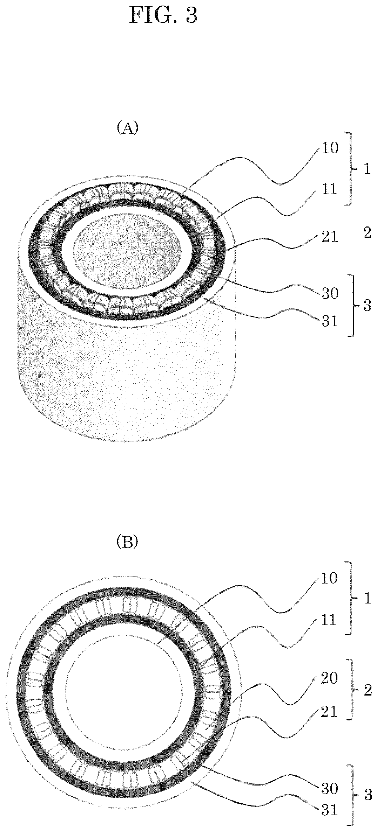

A rotary electric machine according an example useful for understanding the invention (FIG. 3) includes, in stated order from outermost to centermost, low-speed rotor 3 that includes magnetic material 31 and permanent magnets 30; stator 2 that includes coils 21 wound around pole pieces 20; and high-speed rotor 1 that includes permanent magnets 11 and magnetic material 10. Here, high-speed rotor 1 and low-speed rotor 3 are examples of the first rotor and the second rotor, respectively, and the operating principle works even if high-speed rotor 1 and low-speed rotor 3 are interchanged with each other. However, in the present embodiment, low-speed rotor 3 that is multipolar is disposed on the outer side. Moreover, although coils 21 wound around pole pieces 20 are wound by short-pitch concentrated winding, the winding method is not limited to this method.

As described above, the rotary electric machine according to the embodiment includes: a first rotor, stator 2, and a second rotor that are coaxially disposed in stated order from radially centermost to radially outermost and spaced apart from one another, stator 2 including a plurality of pole pieces 20 and a plurality of windings (coils 21) in a circumferential direction. The first rotor includes magnetic material 10 and permanent magnets 11. The second rotor includes magnetic material 31 and permanent magnets 30. The plurality of windings generate electromagnetic torque in the first rotor and the second rotor, the electromagnetic torque is magnetically transferred to the second rotor by rotation of the first rotor, or magnetically transferred to the first rotor by rotation of the second rotor, and in one of the first rotor and the second rotor, torque that is magnetically transferred from an other of the first rotor and the second rotor is superimposed on the electromagnetic torque.

Next, the operating principles of the present invention will be described. It is a premise that the total number of pole pairs of high-speed rotor 1, the total number of pole pairs of low-speed rotor 3, and the total number of pole pieces of stator 2 fulfill the conditions for establishing the magnetic deceleration mechanism described above. In other words, one of $N_S = N_L + N_H$ and Ns = $N_L - N_H$ is satisfied when the first rotor and the second rotor are magnetically coupled, where Ns denotes the total number of magnetic poles of stator 2, $N_L$ denotes the total number of magnetic poles of the first rotor, and $N_H$ denotes the total number of magnetic poles of the second rotor. When high-speed rotor 1 rotates at rotation speed $\omega_H$, frequency $F_H$ of the back electromotive force generated in coils 21 of stator 2 is $N_H\omega_H$. On the other hand, rotation speed $\omega_L$ of low-speed rotor 3 is $\omega_H/G_r$, and frequency $F_L$ of the back electromotive force generated in coils 21 of stator 2 by the rotation of low-speed rotor 3 is $N_L\omega_L = (G_rN_H)(\omega_H/G_r) = F_H$. Accordingly, the frequency of the back electromotive force generated in coils 21 of stator 2 by rotation of high-speed rotor 1 and the frequency of the back electromotive force generated in coils 21 of stator 2 by rotation of low-speed rotor 3 are the same. Here, high-speed rotor 1 and low-speed rotor 3 are included in the rotary electric machine according to the present invention that fulfills the conditions for establishing the magnetic deceleration mechanism. Therefore, when the conditions for establishing the magnetic deceleration mechanism are fulfilled, and high-speed rotor 1 and the total number of pole pieces of stator 2, and low-speed rotor 3 and the total number of pole pieces of stator 2 is a combination that can cause, for example, a three-phase permanent magnet brush-less motor to rotate, torque is generated in both rotors by the current applied to coils 21 of stator 2.

It is assumed that low-speed rotor 3 rotates constantly at $\omega_L$. When frequency $\omega_H$ and electric current I are applied to coils 21 of stator 2, torque $T_H$ that is generated in high-speed rotor 1 is $T_H = k_{tH}I$ when torque constant $k_{tH}$ is used, and torque $T_L$ that is generated in low-speed rotor 3 is $T_L = k_{tL}I$ when torque constant $k_{tL}$ is used.

The torque generated in high-speed rotor 1 by the electric current of coils 21 is equal to the reaction torque from low-speed rotor 3 that is generated by operation as a magnetic reduction gear, and the torque is multiplied by the reduction ratio and transmitted to the low-speed rotor. Therefore, when a loss is disregarded, torque To outputted from low-speed rotor 3 is $T_O = T_L + G_r T_H$ and it can be understood that the electromagnetic torque generated in low-speed rotor 3 by the windings of the stator, and the torque that is magnetically transferred from high-speed rotor 1 are superimposed on each other. In other words, one of the first rotor and the second rotor can be accelerated or decelerated when the torque that is magnetically transferred from the other of the first rotor and the second rotor is superimposed.

Next, the magnetic deceleration structure model was created based on this principle, and an effect test was simulated. Note that a model of the rotary electric machine is created using the following elements.

Embodiment of the claimed invention:

The total number of pole pairs of the high-speed rotor: 4
The total number of pole pairs of the low-speed rotor: 8
The total number of pole pieces of the stator: 12
Reduction ratio:-2 (= -8/4)
The outermost diameter: 110 mm
The length in the axis direction: 80 mm
The number of turns of the coils: 10
Magnetization of the permanent magnet: 1.28 T

First, in order to check whether torque is generated in each of the high-speed rotor and low-speed rotor by applying electric current to the coils of the stator, a counter electromotive voltage when the high-speed rotor and the low-speed rotor are rotated in accordance with the reduction ratio is checked.

The back electromotive force generated in the coils of the stator under each of conditions (a), (b), and (c) listed below was obtained.

(a) Fix the low-speed rotor, and forcibly rotate the high-speed rotor at -60 r/min.
(b) Fix the high-speed rotor, and forcibly rotate the high-speed rotor at 30 r/min.
(c) Forcibly rotate the high-speed rotor at -60 r/min and forcibly rotate the low-speed rotor at 30 r/min.

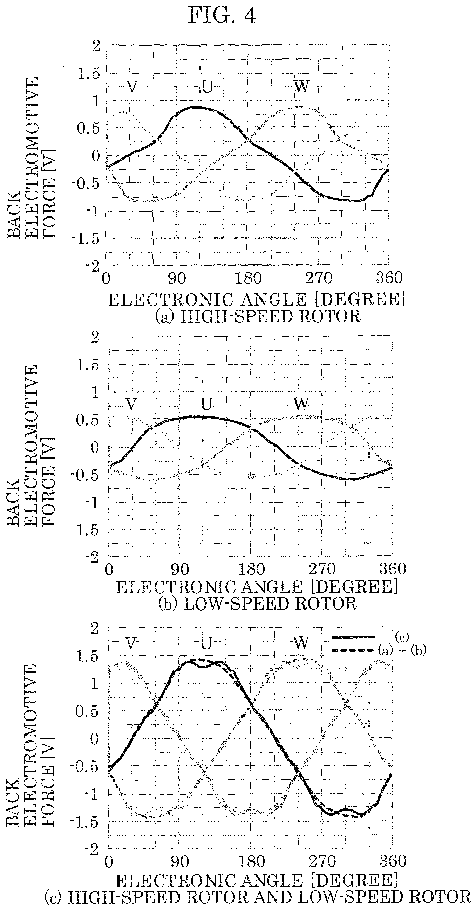

The results are shown in FIG. 4. The voltage phases of the back electromotive force generated under conditions (a) and (b) are equal, and the back electromotive force generated under condition (c) in which both rotors were rotated in accordance with the reduction ratio is equal to the sum of the back electromotive force generated under conditions (a) and (b). Therefore, it can be understood that torque can be generated in each of the high-speed rotor and low-speed rotor by applying three-phase sine-wave current to the coils of the stator.

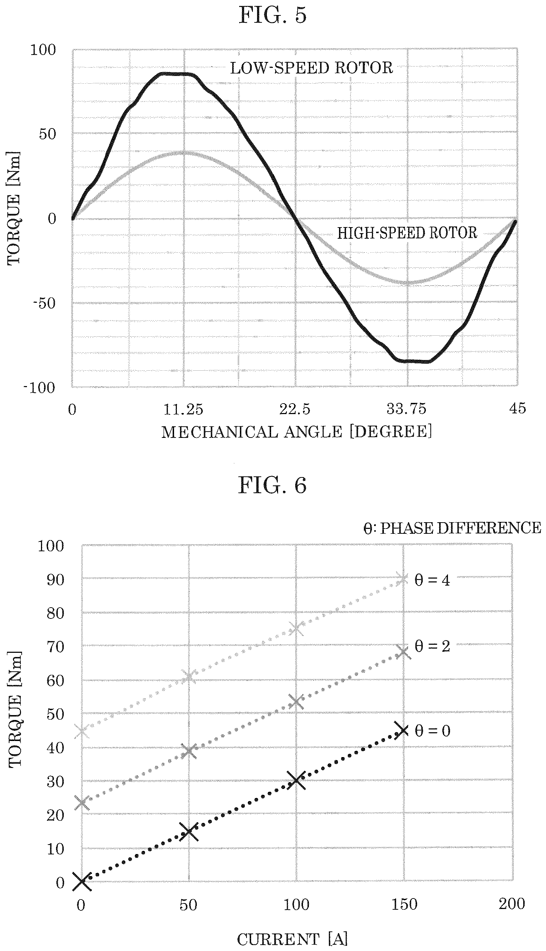

Next, in order to check whether the torque of the high-speed rotor is transmitted to the low-speed rotor as the magnetic transmission mechanism, the high-speed rotor was fixed, the low-speed rotor was forcibly rotated from a magnetically stable position, and transmission torque generated according to the difference between two rotor angles (phase difference) from the magnetically stable position was obtained. This result is shown in FIG. 5. The maximum transmission torque of both rotors is generated when the phase difference is approximately 11.25 degrees, and the maximum transmission torque of the high-speed rotor and the maximum transmission torque of the low speed rotor are 38.6 Nm and 85.8 Nm, respectively. Although this shows that the torque generated by the low-speed rotor and the torque generated by the high-speed rotor are almost equal to the reduction ratio, the difference with respect to the theoretical value occurs due to cogging torque.

In order to check the effect of superimposing the torque, the high-speed rotor was forcibly rotated at -60 r/min, the low-speed rotor was forcibly rotated at 30 r/min, sine-wave current was applied, and the torque of the low-speed rotor when the phases of the high-speed rotor and the low-speed rotor was changed was obtained. This result is shown in FIG. 6. Regardless of the phase difference, the torque of the low-speed rotor increased with the increasing electric current. When the phase difference was set to 4 degrees and the magnetomotive force with an amplitude of 150 A was applied to the coils, the torque of the low-speed rotor was 89 Nm, and the torque increased by 44 Nm compared with the torque when the electric current is not applied.

In the rotary electric machine according to the present invention, the torque of the low-speed rotor when the current is not applied is equivalent to the transmission torque generated due to the phase difference with respect to the high-speed rotor. This can be achieved also in a rotary electric machine with a conventional magnetic deceleration mechanism. Since the torque of the low-speed rotor increases with the increasing electric current in the state where the phase difference is constant, the reaction torque received from the high-speed rotor that serves as a magnetic reduction gear is superimposed on the torque generated in the low-speed rotor by the reaction torque generated by magnetomotive force of the coils.

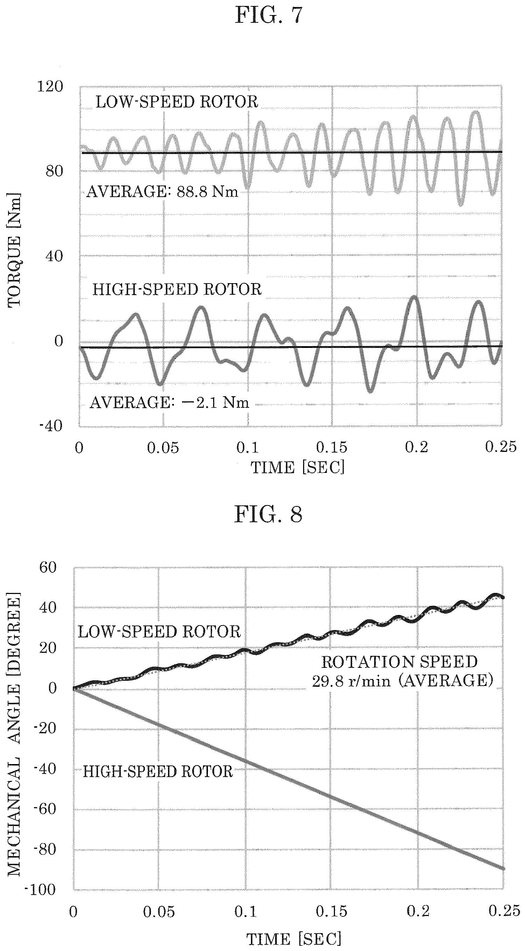

Lastly, in order to verify the operation, the initial phase difference is set to 4 degrees, and the operation when the magnetomotive force with an amplitude of 150 A is applied to the coils is verified. Here, the high-speed rotor was rotated at 60 r/min, and electric current is inputted according to rotation positions of the high-speed rotor. At this time, load L = 89.5 Nm was applied to the low-speed rotor, and the torque generated in each rotor and the number of rotations of the low-speed rotor were obtained. This result is shown in FIGs. 7 and 8.

The average torque of the high-speed rotor was -2.1 Nm and the average torque of the low-speed rotor was 88.8 Nm as shown in FIG. 7, and the average rotation speed of the low-speed rotor was 29.8 r/min as shown in FIG. 8. Although the average torque of the high-speed rotor should be theoretically zero, torque ripple and a time period in which averaging processing is performed influence the average torque, and thus the average torque of the high-speed rotor is not zero. The ratio of rotation speed between both rotors is approximately equal to the reduction ratio. Lastly, the torque of the low-speed rotor fluctuates around approximately 89 Nm, and has hardly changed since the time zero. This indicates that the phase difference between both rotors maintains an average of 4 degrees, and torque is generated in the low-speed rotor by the magnetomotive force of 150 A, as understood from FIG. 5. In other words, the reaction torque in a magnetic reduction gear is superimposed on the torque generated by the coil current, and is outputted from the low-speed rotor.

INDUSTRIAL APPLICABILITY

The present disclosure can be used for rotary electric machines in general that have a magnetic deceleration mechanism.

REFERENCE MARKS IN THE DRAWINGS

| | |
|---|---|
| 1, 100 | high-speed rotor |
| 2 | stator |
| 3, 300 | low-speed rotor |
| 10, 31 | magnetic material |
| 11, 30 | permanent magnet |
| 20, 201 | pole piece |
| 21 | coil |
| 102 | pole pair |
| 200 | stator |

**Claims**

1. A rotary electric machine, comprising:

a first rotor (1, 100), a stator (2), and a second rotor (3, 300) that are coaxially disposed in stated order from radially centermost to radially outermost and spaced apart from one another, the stator (2) including a plurality of pole pieces (20, 201) and a plurality of windings in a circumferential direction; or
a second rotor (3, 300), a stator (2), and a first rotor (1, 100) that are coaxially disposed in stated order from radially centermost to radially outermost and spaced apart from one another, the stator (2) including a plurality of pole pieces (20, 201) and a plurality of windings in a circumferential direction, wherein
the first rotor (1, 100) is a high-speed rotor,
the second rotor (3, 300) is a low-speed rotor,
the first rotor (1, 100) and the second rotor (3, 300) each include a magnetic material and permanent magnets (11, 30),

the plurality of windings generate electromagnetic torque in the first rotor (1, 100) and the second rotor (3, 300), the electromagnetic torque is magnetically transferred to the second rotor (3, 300) by rotation of the first rotor (1, 100),

in the second rotor (3, 300), torque that is magnetically transferred from the first rotor (1, 100) is superimposed on the electromagnetic torque, and

a total number of magnetic pole pieces (20, 201) of the stator (2) is 12, a total number of pole pairs (102) of the first rotor (1, 100) is 4,

**characterized in that**
a total number of pole pairs (102) of the second rotor (3, 300) is 8.

2. The rotary electric machine according to claim 1, wherein
the second rotor (3, 300) is accelerated or decelerated when the torque that is magnetically transferred from the first rotor (1, 100) is superimposed.

## Patentansprüche

1. Elektrische Drehmaschine, die umfasst:

einen ersten Rotor (1, 100), einen Stator (2) und einen zweiten Rotor (3, 300), die koaxial in der angegebenen Reihenfolge von radial in der Mitte nach radial außen angeordnet und voneinander beabstandet sind, wobei der Stator (2) mehrere Polstücke (20, 201) und mehrere Wicklungen in Umfangsrichtung umfasst; oder
einen zweiten Rotor (3, 300), einen Stator (2) und einen ersten Rotor (1, 100), die koaxial in der angegebenen Reihenfolge von radial am weitesten nach radial außen angeordnet und voneinander beabstandet sind, wobei der Stator (2) mehrere Polstücke (20, 201) und mehrere Wicklungen in einer Umfangsrichtung umfasst, wobei der erste Rotor (1, 100) ein Schnellläuferrotor ist,
der zweite Rotor (3, 300) ein Langsamläuferrotor ist,
der erste Rotor (1, 100) und der zweite Rotor (3, 300) jeweils ein magnetisches Material und Permanentmagnete (11, 30) umfassen,
die mehreren Wicklungen ein elektromagnetisches Drehmoment im ersten Rotor (1, 100) und im zweiten Rotor (3, 300) erzeugen,
das elektromagnetische Drehmoment durch Drehung des ersten Rotors (1, 100) magnetisch auf den zweiten Rotor (3, 300) übertragen wird,
im zweiten Rotor (3, 300) dem elektromagnetischen Drehmoment ein magnetisch vom ersten Rotor (1, 100) übertragenes Drehmoment überlagert wird, und
eine Gesamtzahl der magnetischen Polschuhe (20, 201) des Stators (2) 12 beträgt, und eine Gesamtzahl der Polpaare (102) des ersten Rotors (1, 100) 4 beträgt, **dadurch gekennzeichnet, dass**
eine Gesamtzahl von Polpaaren (102) des zweiten Rotors (3, 300) 8 beträgt.

2. Elektrische Drehmaschine nach Anspruch 1, wobei
der zweite Rotor (3, 300) beschleunigt oder abgebremst wird, wenn das vom ersten Rotor (1, 100) magnetisch übertragene Drehmoment überlagert wird.

## Revendications

1. Machine électrique tournante, comprenant :

un premier rotor (1, 100), un stator (2) et un deuxième rotor (3, 300) qui sont disposés coaxialement dans l'ordre indiqué depuis radialement le plus au centre jusqu'à radialement le plus à l'extérieur et espacés les uns des autres, le stator (2) comprenant une pluralité de pièces polaires (20, 201) et une pluralité d'enroulements dans une direction circonférentielle ; ou
un deuxième rotor (3, 300), un stator (2) et un premier rotor (1, 100) qui sont disposés coaxialement dans l'ordre indiqué depuis radialement le plus au centre jusqu'à radialement le plus à l'extérieur et espacés les uns des autres, le stator (2) comprenant une pluralité de pièces polaires (20, 201) et une pluralité d'enroulements dans une direction circonférentielle, dans laquelle
le premier rotor (1, 100) est un rotor à grande vitesse,

le deuxième rotor (3, 300) est un rotor à basse vitesse,

le premier rotor (1, 100) et le deuxième rotor (3, 300) comprennent chacun un matériau magnétique et des aimants permanents (11, 30),

la pluralité d'enroulements génèrent un couple électromagnétique dans le premier rotor (1, 100) et le deuxième rotor (3, 300),

le couple électromagnétique est transféré magnétiquement au deuxième rotor (3, 300) par rotation du premier rotor (1, 100),

dans le deuxième rotor (3, 300), le couple qui est transféré magnétiquement depuis le premier rotor (1, 100) est superposé au couple électromagnétique, et

un nombre total de pièces polaires magnétiques (20, 201) du stator (2) est de 12, un nombre total de paires polaires (102) du premier rotor (1, 100) est de 4,

**caractérisée en ce que**

le nombre total de paires polaires (102) du deuxième rotor (3, 300) est de 8.

2. Machine électrique tournante selon la revendication 1, dans laquelle

le deuxième rotor (3, 300) est accéléré ou décéléré lorsque le couple qui est transféré magnétiquement depuis le premier rotor (1, 100) est superposé.

## FIG. 1

(A)

(B)

# FIG. 2

(A)

HIGH-SPEED
ROTOR

N

102

S

$\theta$

S

N

TOTAL
NUMBER OF
POLE PAIRS: Nh

(C)

STATOR

201

TOTAL
NUMBER OF
MAGNETIC
POLES: Ns

(B)

$F(\theta)$

MAGNETOMOTIVE
FORCE
DISTRIBUTION OF
PERMANENT
MAGNETS

NORTH
POLE

0

SOUTH
POLE

$$F(\theta) = A \sin N_h \theta$$

(D)

$R(\theta)$

MAGNETOMOTIVE
FORCE
DISTRIBUTION OF
POLE PIECES

POLE
PIECES

AIR

0

$$R(\theta) = R_0 + R_a \sin N_s \theta$$

# FIG. 3

(A)

(B)

# FIG. 4

(a) HIGH-SPEED ROTOR

(b) LOW-SPEED ROTOR

(c) HIGH-SPEED ROTOR AND LOW-SPEED ROTOR

## FIG. 5

## FIG. 6

## FIG. 7

## FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5204094 B

- EP 3007336 A1

**Non-patent literature cited in the description**

- **NOBORU NIGUCHI ; KATSUHIRO HIRATA.** A Novel Magnetic-Geared Motor. *Journal of the Japan Society of Applied Electromagnetics and Mechanics,* 2013, vol. 21 (2), 110-115